# EUROPÄISCHE PATENTSCHRIFT

(11) **EP 2 512 880 B1**
(45) Veröffentlichungstag und Bekanntmachung des Hinweises auf die Patenterteilung: **05.07.2017**
(21) Anmeldenummer: 10778902.6
(22) Anmeldetag: 25.10.2010
(51) Int. Cl.: B60S 1/04

(54) **SCHEIBENWISCHVORRICHTUNG**
WINDSHIELD WIPER DEVICE
DISPOSITIF D'ESSUIE-GLACE

(30) Priorität: 17.12.2009 DE 102009054908
(43) Veröffentlichungstag der Anmeldung: 24.10.2012
(73) Patentinhaber: Robert Bosch GmbH, 70442 Stuttgart (DE)
(72) Erfinder: KASTINGER, Guenter, 76571 Gaggenau-Sulzbach (DE); KRAUS, Achim, 77815 Buehl (DE); SAUM, Andreas, 77815 Buehl (DE)
(86) Internationale Anmeldenummer: PCT/EP2010/066033
(87) Internationale Veröffentlichungsnummer: WO 2011/072923

(56) Entgegenhaltungen:
- WO-A1-2011/072920
- DE-A1- 19 712 113
- DE-A1- 19 820 798
- DE-A1- 19 860 264
- DE-A1-102006 027 603
- FR-A1- 2 783 477

## Beschreibung

Die vorliegende Erfindung betrifft eine Scheibenwischvorrichtung für ein Kraftfahrzeug mit einem Wischermotor, der über ein mit dem Wischermotor verbundenes Getriebegehäuse an einem an einer Fahrzeugkarosserie des Kraftfahrzeuges ausgebildeten Wischerträger mittels einer Motorplatine befestigbar ist, indem der Wischerträger zwischen der Motorplatine und dem Getriebegehäuse klemmend gehalten ist.

### Stand der Technik

Scheibenwischvorrichtungen dieser Art sind bereits bekannt. Dabei ist es das Ziel, den Wischermotor möglichst sicher an der Fahrzeugkarosserie zu befestigen und auch Biege- und Torsionsbelastungen auffangen zu können. Gleichzeitig soll die Scheibenwischvorrichtung eine leichte Montage bzw. Demontage ermöglichen, um im Montage- und Wartungsfall keine unnötigen Arbeitskosten zu erzeugen.

Aus der FR 2 783 477 A1 ist eine Befestigungsvorrichtung für eine Scheibenwischvorrichtung bekannt, bei der die Befestigung des Klemmrohrs zwischen einer Motorplatine und einer letztere umgreifenden Schalenkonstruktion erfolgt. Diese Art der Befestigung stellt sich aber aufgrund der formgenau anzupassenden Konturen von Schale und Motorplatine als sehr aufwendig und fehleranfällig dar. Außerdem ist die Fertigung der Schalenkonstruktion sehr kostspielig. Auch das Auftreten von Toleranzen in der Fertigung stellt ein großes Problem bei dieser Art der Befestigung dar.

Aus der DE 10 2006 027603 A1 und der DE 198 60 264 A1 sind Merkmale gemäß des Oberbegriffs des unabhängigen Anspruchs bekannt.
Aus der DE 198 20 798 A1 ist eine Scheibenwischvorrichtung bekannt, die einen Wischermotor umfasst, welcher über ein mit dem Wischermotor verbundenes Getriebegehäuse und über einen Wischerträger mit einem Wischerträger in Form eines Hohlprofils an der Fahrzeugkarosserie befestigt ist. Das Getriebegehäuse hat mehrere Schraubenstutzen, die im Abstand zu einem abtriebsseitigen Befestigungsdom angeordnet sind. Das Hohlprofil wird zwischen dem Schraubenstutzen einerseits und dem Befestigungsdom andererseits eingesetzt bzw. angepresst, so dass sich der Wischerträger am Befestigungsdom und am Schraubenstutzen abstützen kann. Um ein Herausrutschen aus dieser Position zu Schraubenstutzen abstützen kann. Um ein Herausrutschen aus dieser Position zu verhindern, ist eine Haltevorrichtung in der Form einer Motorplatine vorgesehen, die sich an den Schraubenstutzen und dem Befestigungsdom bzw. dem Gegenlager des Getriebegehäuses anliegt. In axialer Richtung ist der Wischerträger bzw. das Klemmrohr gegenüber dem Getriebegehäuse formschlüssig gesichert, indem es in dem Bereich der Schraubenstutzen und/oder des Befestigungsdoms Einbuchtungen aufweist, die die Schraubenstutzen bzw. den Befestigungsdom bereichsweise umfassen. Die Scheibenwischvorrichtung wird über die Motorplatine und das Getriebegehäuse mit dem Wischerträger verpresst, wobei die Presskraft über die Schraubenverbindung zwischen Motorplatine und Getriebegehäuse aufgebracht wird. Ein Verdrehen des Klemmrohrs durch äußere Kräfte wird ausschließlich über die Reibflächen zwischen der Motorplatine und dem Klemmrohr sowie durch die formschlüssige Verbindung zwischen den an dem Getriebegehäuse ausgebildeten Befestigungsdom und dem Klemmrohr vermieden. Eine Positionierung der Motorplatine innerhalb des Montagebereiches erfolgt durch ein Einsetzen der Schrauben in die im Getriebegehäuse ausgebildeten Schraubenstützen.

Nachteilig an diesem System ist jedoch, dass eventuell auf den Wischerträger wirkende Biege- und/oder Torsionskräfte nur unzureichend von der Befestigungskonstruktion aufgenommen werden können. Außerdem ist die Montage aufgrund der exakt aufeinander abzustimmenden und einander anzupassenden Bauteile sehr aufwendig.

Es ist daher Aufgabe der vorliegenden Erfindung, eine Scheibenwischvorrichtung vorzusehen, die eine einfache und sichere Befestigung des Wischermotors an der Motorplatine auch bei Auftreten von Biege- und/oder Torsionskräften ermöglicht.

### Offenbarung der Erfindung

Diese Aufgabe wird erfindungsgemäß dadurch gelöst, dass eine Verdrehsicherung an dem Wischerträger vorgesehen ist, welche durch mindestens eine an dem Wischerträger ausgebildete Vertiefung gebildet ist, in die ein an der Motorplatine und/oder an dem Getriebegehäuse korrespondierend ausgebildeter Vorsprung formschlüssig eingreift.

Mit anderen Worten wird durch Vorsehen von Einprägungen in dem Wischerträger ermöglicht, dass durch an der Motorplatine bzw. dem Getriebegehäuse korrespondierend ausgebildete Vorsprünge ein Formschluss zwischen dem Wischerträger und der Motorplatine bzw. dem Getriebegehäuse gebildet wird. Durch den Formschluss können auf die Scheibenwischvorrichtung einwirkende Biege- und Torsionsmomente auf einfache Weise aufgenommen und so einem Verdrehen der Scheibenwischvorrichtung an der Anbindung mit der Fahrzeugkarosserie erfolgreich entgegengewirkt werden.

Ist mindestens ein Vorsprung in der Motorplatine ausgebildet, der formschlüssig in eine in dem Wischerträger ausgebildete Vertiefung eingreift, so dient dieser Vorsprung nicht nur als Verdrehsicherung sondern auch als Vorpositionierungsmittel der Motorplatine und vereinfacht so bei der Montage der Scheibenwischvorrichtung an der Fahrzeugkarosserie ein Verschrauben der Motorplatine mit dem Getriebegehäuse. Zusätzliche Positionierungshilfen zur Vereinfachung der Verschraubung der Motorplatine mit dem Getriebegehäuse können so eingespart werden.

Um Fertigungstoleranzen ausgleichen zu können, ist in einem Ausführungsbeispiel die Vertiefung in dem Wischerträger keil- oder kegelförmig ausgebildet. Dadurch wird erreicht, dass beispielsweise zu groß ausgebildete Vorsprünge dennoch zumindest bereichsweise in die in dem Wischerträger ausgebildete Vertiefung eingreifen können und somit trotz der Fertigungstoleranzen ein Sichern gegen ein Verdrehen des Klemmrohres zwischen Motorplatine und Getriebegehäuse gewährleisten. Nach der Erfindung ist der Vorsprung durch eine Stanz-Biegelasche gebildet. Die Stanz-Biegelasche ist dabei keilförmig ausgebildet. Die keilförmige Ausbildung sorgt wiederum dafür, dass eventuell auftretende Toleranzen bezüglich der Vertiefung bzw. der Lasche kompensiert werden können. Die rechteckige Ausbildung der Stanz-Biegelasche hingegen stellt eine Sicherung gegen ein ungewolltes Herausrutschen der Lasche aus der Vertiefung in dem Wischerträger auch bei großen Biege- und Torsionsmomenten dar.

Natürlich ist es auch möglich, den Wischerträger mit mehreren Vertiefungen zu versehen, die mit in der Motorplatine und/oder dem Getriebegehäuse korrespondierend ausgebildeten Vorsprüngen zusammenwirken, wobei die Vorsprünge formschlüssig in die in dem Wischerträger ausgebildeten Vertiefungen eingreifen.

Eine besonders zuverlässige Anbindung der Scheibenwischvorrichtung an der Fahrzeugkarosserie wird erreicht, indem die Klemmverbindung durch mehrere an dem Getriebegehäuse angeformte, insbesondere kegelförmig ausgebildete Befestigungsdome gebildet ist, wobei der Vorsprung in der Motorplatine und/oder dem Getriebegehäuse im Wesentlichen mittig zwischen zwei der Befestigungsdome angeordnet ist.

In einem Ausführungsbeispiel der vorliegenden Erfindung ist der Vorsprung einteilig mit dem Getriebegehäuse und/oder der Motorplatine ausgebildet. Dies ist als vorteilhaft zu bewerten, da hierdurch die Teilevielfalt insbesondere bei der Montage und damit auch die Gefahr von Montagefehlern verringert wird.

Um eine entsprechende Verdrehsicherung auch in bereits gefertigten Motorplatinen bzw. Getriebegehäusen vorsehen zu können oder die Position der Verdrehsicherung variabel gestalten zu können, ist in einem alternativen Ausführungsbeispiel der erfindungsgemäße Vorsprung an die Motorplatine und/oder das Getriebegehäuse angeschraubt oder angeschweißt und entsprechend nach der Herstellung der Motorplatine und/oder des Getriebegehäuses nachträglich angebracht, um im montierten Zustand in die im Wischerträger ausgebildete Vertiefung zur Bereitstellung einer Verdrehsicherung einzugreifen.

Hinsichtlich weiterer vorteilhafter Ausführungsformen der vorliegenden Erfindung wird auf die Unteransprüche sowie die nachfolgende Beschreibung mehrerer Ausführungsbeispiele anhand der beiliegenden Zeichnung verwiesen.

### Kurze Beschreibung der Zeichnung

Es zeigen:
- Figur 1:: eine schematische Teildarstellung einer erfindungsgemäßen Scheibenwischvorrichtung im Schnitt;
- Figur 2:: einen Wischerträger in Form eines Klemmrohrs mit einer erfindungsgemäßen Vertiefung;
- Figur 3:: eine Teildarstellung einer erfindungsgemäßen Motorplatine mit einer keilförmigen Stanz-Biegelasche;
- Figur 4:: eine Teildarstellung einer Scheibenwischvorrichtung mit Verdrehsicherung und eckiger Stanz-Biegelasche mit Schnitt; und
- Figur 5:: eine Schnittdarstellung einer Verdrehsicherung mit in dem Getriebegehäuse ausgebildeten Vorsprung.

### Ausführungsbeispiele

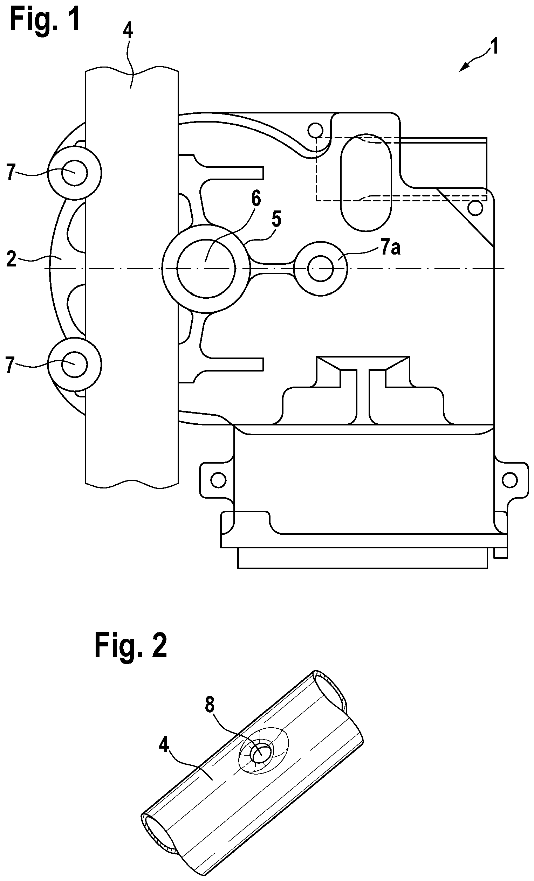

Die Figur 1 zeigt eine schematische Teildarstellung einer erfindungsgemäßen Scheibenwischvorrichtung 1. Zur Vereinfachung wurde die Darstellung auf das Befestigungsprinzip reduziert.

Die Scheibenwischvorrichtung 1 weist einen nicht dargestellten Wischermotor auf, der über ein mit dem Wischermotor verbundenes Getriebegehäuse 2 und eine Motorplatine 3 an einer Fahrzeugkarosserie des Kraftfahrzeuges befestigt ist. Zur Befestigung des Wischermotors an der Fahrzeugkarosserie ist ein Wischerträger 4 in der Form eines Klemmrohrs an der Fahrzeugkarosserie vorgesehen, der zwischen dem Getriebegehäuse 2 und der Motorplatine 3 klemmend gehalten ist. Der Wischerträger 4 ist als Hohlprofil ausgebildet und so in das Getriebegehäuse 2 eingesetzt, dass er zwischen einem Abtriebsdom 5, in dem eine Abtriebswelle 6 gelagert ist, und drei Befestigungsdomen 7, 7a hindurch geführt ist. Die Klemmverbindung zwischen Fahrzeugkarosserie und Scheibenwischvorrichtung 1 wird in diesem Ausführungsbeispiel erreicht, indem die Motorplatine 3 mit drei an dem Getriebegehäuse 2 angeformten kegelförmig ausgebildeten Befestigungsdomen 7, 7a verschraubt wird.

Die Befestigungsdome 7, 7a sind in Achsrichtung des Wischerträgers 4 zum Abtriebsdom 5 der Lagerwelle versetzt angeordnet und die Umfangsflächen der Befestigungsdome 7, 7a sind kegelförmig ausgebildet, um eventuelle Fertigungstoleranzen der Befestigungsdome 7, 7a bzw. des Wischerträgers 4 ausgleichen zu können.

An dem Wischerträger 4 ist eine Verdrehsicherung in der Form einer Vertiefung 8 vorgesehen, in die ein an der Motorplatine 3 ausgebildeter Vorsprung 9 formschlüssig eingreift. Die Vertiefung 8 wird in diesem Ausführungsbeispiel durch eine keil- oder kegelförmige Öffnung in dem Wischerträger 4 realisiert, und ist so ausgebildet, dass sie eventuell auftretende Fertigungstoleranzen insbesondere hinsichtlich des an der Motorplatine 3 vorgesehenen Vorsprungs 9 ausgleichen kann.

Der Vorsprung 9 in der Motorplatine 3 ist in diesem Ausführungsbeispiel im Wesentlichen mittig zwischen den beiden Befestigungsdomen 7 angeordnet und bildet somit neben der Verdrehsicherung auch noch eine Vorpositionierungsfunktion für die Motorplatine 3, die ein anschließendes Verschrauben der Motorplatine 3 mit dem Getriebegehäuse 2 wesentlich vereinfacht.

In Figur 2 ist der Wischerträger 4 in der Form eines Klemmrohres mit einer erfindungsgemäßen Vertiefung 8 gezeigt, welche mit einem in der Motorplatine 3 ausgebildeten Vorsprung 9 zusammenwirkt, um eine Verdrehsicherung zu bilden.

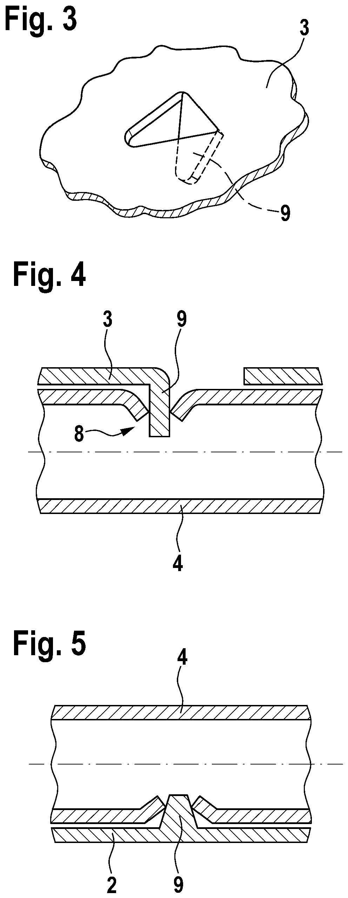

Die Figur 3 zeigt eine Ausführungsvariante eines in einer Motorplatine 3 ausgebildeten Vorsprungs 9. Der Vorsprung 9 ist in diesem Ausführungsbeispiel durch eine keilförmige Stanz-Biegelasche gebildet. Die keilförmige Ausbildung hat den Vorteil, dass eventuelle Fertigungstoleranzen hinsichtlich der Ausbildung der Vertiefung 8 in dem Klemmrohr 4 hierdurch ausgeglichen werden können. Ist die Vertiefung 8 ein wenig kleiner geraten als vorgegeben, so dringt die keilförmige Stanz-Biegelasche 11 des Klemmrohres 4 zwar nicht ganz so tief in die Vertiefung 8 in dem Klemmrohr 4 ein. Funktionsverluste hinsichtlich der Verdrehsicherung müssen dabei aber nicht in Kauf genommen werden, da die Eindringtiefe zur Herstellung einer kraftschlüssigen Verbindung dennoch ausreicht.

Die Figur 4 zeigt ein nicht angesprochenes Ausführungsbeispiel, in dem der Vorsprung 9 durch eine im Wesentlichen rechteckige Stanz-Biegelasche gebildet ist. Auch hier wird die Biegelasche 9 einfach in die Motorplatine 3 gestanzt und zur Montage des Klemmrohrs in Richtung des Klemmrohrs 4 verbogen.

In einem alternativen nicht dargestellten Ausführungsbeispiel wird der Vorsprung 9 erst nach Herstellung des Getriebegehäuses 2 bzw. der Motorplatine 3 einfach in einen dafür vorgesehenen Befestigungsbereich eingeschraubt oder angeschweißt bzw. angelötet. Andere im Stand der Technik bekannte Befestigungsverfahren sind zur nachträglichen Anbringung des Vorsprunges 9 an das Getriebegehäuse 2 bzw. die Motorplatine 3 ebenfalls denkbar. Ein nachträgliches Anbringen des Vorsprungs 9 an die Motorplatine 3 bzw. das Getriebegehäuse 2 hat den Vorteil, dass dessen Form nachträglich an die Gegebenheiten angepasst und der Vorsprung 9 bei Materialversagen einfach ausgetauscht werden kann.

In Figur 5 ist schließlich ein nicht angesprochenes Ausführungsbeispiel gezeigt, in dem der den Formschluss bildende Vorsprung 9 an dem Getriebegehäuse 2 ausgebildet ist und wie in den Beispielen vorher bereits angedeutet, in eine in dem Wischerträger 4 ausgebildete Öffnung 8 eingreift und so eine formschlüssige Verbindung zwischen Getriebegehäuse 2 und Wischerträger 4 bereitstellt. Hierdurch wird eine zuverlässige Verdrehsicherung der Scheibenwischvorrichtung 1 im Befestigungsbereich mit der Fahrzeugkarosserie gewährleistet. Auch hier ist der Vorsprung 9 einteilig mit dem Getriebegehäuse 2 ausgebildet. Wie bereits oben beschrieben, kann es auch zweckmäßig sein, den Vorsprung 9 erst nach Fertigung des Getriebegehäuses 2 an das Getriebegehäuse 2 bzw. die Motorplatine 3 anzuschrauben.

## Patentansprüche

1. Scheibenwischvorrichtung (1) mit einem Wischerträger (4) für ein Kraftfahrzeug mit einem Wischermotor, der über ein mit dem Wischermotor verbundenes Getriebegehäuse (2) an einem an einer Fahrzeugkarosserie des Kraftfahrzeuges mittels einer Motorplatine (3) befestigt ist, indem dem Wischerträger der Scheibenwischvorrichtung (1), insbesondere ein Klemmrohr, zwischen der Motorplatine (3) und dem Getriebegehäuse (2) klemmend gehalten ist, wobei eine Verdrehsicherung an dem Wischerträger (4) vorgesehen ist, welche durch mindestens eine in dem Wischerträger (4) ausgebildete Vertiefung (8) gebildet ist, in die ein an der Motorplatine (3) und/oder an dem Getriebegehäuse (2) korrespondierend ausgebildeter Vorsprung (9) formschlüssig eingreift, **dadurch gekennzeichnet, dass** der Vorsprung (9) durch eine Stanz- oder Biegelasche gebildet ist, wobei die Stanz- oder Biegelasche keilförmig ausgebildet ist.

2. Scheibenwischvorrichtung (1) nach Anspruch 1, **dadurch gekennzeichnet, dass** eine Vertiefung (8) in dem Wischerträger (4) keil-oder kegelförmig ausgebildet ist, um vorhandene Teleranzen auszugleichen.

3. Scheibenwischvorrichtung (1) nach einem der vorhergehenden Ansprüche, **dadurch gekennzeichnet, dass** der Wischerträger (4) mehrere Vertiefungen (8) aufweist, die mit in der Motorplatine (3) und/oder dem Getriebegehäuse (2) korrespondierend ausgebildeten Vorsprüngen (9) zusammen wirken, wobei die Vorsprünge (9) formschlüssig in die in dem Wischerträger (4) ausgebildeten Vertiefungen (8) eingreifen.

4. Scheibenwischvorrichtung (1) nach einem der vorhergehenden Ansprüche, **dadurch gekennzeichnet, dass** die Klemmverbindung durch drei an dem Getriebegehäuse (2) angeformte, insbesondere kegelförmig ausgebildete Befestigungsdome (7, 7a) gebildet ist, wobei der Vorsprung (9) in der Motorplatine (3) und/oder dem Getriebegehäuse (2) im wesentlichen mittig zwischen den Befestigungsdomen (7) angeordnet ist.

5. Scheibenwischvorrichtung (1) nach einem der vorhergehenden Ansprüche, **dadurch gekennzeichnet, dass** der Vorsprung (9) einteilig mit dem Getriebegehäuse (2) und/oder der Motorplatine (3) ausgebildet ist.

6. Scheibenwischvorrichtung (1) nach einem der Ansprüche 2 bis 5, **dadurch gekennzeichnet, dass** der Vorsprung (9) an die Motorplatine (3) und/oder das Getriebegehäuse (2) angeschraubt oder angeschweißt ist.

## Claims

1. Windscreen wiper device (1) with a wiper carrier (4) for a motor vehicle, with a wiper motor which is fastened via a gear mechanism housing (2), which is connected to the wiper motor, to a vehicle body of the motor vehicle by means of a motor mounting plate (3) by to the wiper carrier of the windscreen wiper device (1), in particular a clamping tube, being held in a clamping manner between the motor mounting plate (3) and the gear mechanism housing (2), wherein an anti-twist device is provided on the wiper carrier (4), said anti-twist device being formed by at least one depression (8) which is formed in the wiper carrier (4) and in which a projection (9) formed in a corresponding manner on the motor mounting plate (3) and/or on the gear mechanism housing (2) engages in a form-fitting manner, **characterized in that** the projection (9) is formed by a punched or bent tab, wherein the punched or bent tab is of wedge-shaped design.

2. Windscreen wiper device (1) according to Claim 1, **characterized in that** a depression (8) in the wiper carrier (4) is of wedge-shaped or conical design in order to compensate for tolerances which are present.

3. Windscreen wiper device (1) according to either of the preceding claims, **characterized in that** the wiper carrier (4) has a plurality of depressions (8) which interact with projections (9) correspondingly formed in the motor mounting plate (3) and/or the gear mechanism housing (2), wherein the projections (9) engage in a form-fitting manner in the depressions (8) formed in the wiper carrier (4).

4. Windscreen wiper device (1) according to one of the preceding claims, **characterized in that** the clamping connection is formed by three fastening domes (7, 7a) which are integrally formed on the gear mechanism housing (2) and are in particular of conical design, wherein the projection (9) is arranged substantially centrally between the fastening domes (7) in the motor mounting plate (3) and/or the gear mechanism housing (2).

5. Windscreen wiper device (1) according to one of the preceding claims, **characterized in that** the projection (9) is formed integrally with the gear mechanism housing (2) and/or the motor mounting plate (3).

6. Windscreen wiper device (1) according to one of Claims 2 to 5, **characterized in that** the projection (9) is screwed or welded onto the motor mounting plate (3) and/or the gear mechanism housing (2).

## Revendications

1. Dispositif d'essuie-glace (1) comprenant un support d'essuie-glace (4) pour un véhicule automobile avec un moteur d'essuie-glace, qui est fixé par le biais d'un boîtier de transmission (2) connecté au moteur d'essuie-glace à un sur une carrosserie de véhicule du véhicule automobile au moyen d'une plaque de moteur (3), par le fait qu'au support d'essuie-glace du dispositif d'essuie-glace (1), en particulier un tube de serrage, est retenu par serrage entre la plaque de moteur (3) et le boîtier de transmission (2), une fixation antirotation étant prévue sur le support d'essuie-glace (4), laquelle est formée par au moins un renfoncement (8) réalisé dans le support d'essuie-glace (4), dans lequel s'engage par engagement par correspondance de formes une saillie (9) réalisée de manière correspondante sur la plaque de moteur (3) et/ou sur le boîtier de transmission (2), **caractérisé en ce que** la saillie (9) est formée par une patte estampée ou cintrée, la patte estampée ou cintrée étant réalisée en forme de clavette.

2. Dispositif d'essuie-glace (1) selon la revendication 1, **caractérisé en ce qu'**un renfoncement (8) dans le support d'essuie-glace (4) est réalisé en forme de clavette ou en forme de cône afin de compenser les tolérances existantes.

3. Dispositif d'essuie-glace (1) selon l'une quelconque des revendications précédentes, **caractérisé en ce que** le support d'essuie-glace (4) présente plusieurs renfoncements (8) qui coopèrent avec des saillies (9) réalisées de manière correspondante dans la plaque de moteur (3) et/ou dans le boîtier de transmission (2), les saillies (9) s'engageant par engagement par correspondance de formes dans les renfoncements (8) réalisés dans le support d'essuie-glace (4).

4. Dispositif d'essuie-glace (1) selon l'une quelconque des revendications précédentes, **caractérisé en ce que** la connexion par serrage est formée par trois dômes de fixation (7, 7a) façonnés sur le boîtier de transmission (2), notamment réalisés en forme de cône, la saillie (9) étant disposée dans la plaque de moteur (3) et/ou dans le boîtier de transmission (2) essentiellement au centre entre les dômes de fixation (7).

5. Dispositif d'essuie-glace (1) selon l'une quelconque des revendications précédentes, **caractérisé en ce que** la saillie (9) est réalisée d'une seule pièce avec le boîtier de transmission (2) et/ou avec la plaque de moteur (3).

6. Dispositif d'essuie-glace (1) selon l'une quelconque des revendications 2 à 5, **caractérisé en ce que** la saillie (9) est vissée ou soudée sur la plaque de moteur (3) et/ou sur le boîtier de transmission (2).
